(19) Europäisches Patentamt
European Patent Office
Office européen des brevets

(11) **EP 0 661 329 B1**

(12) **EUROPÄISCHE PATENTSCHRIFT**

(45) Veröffentlichungstag und Bekanntmachung des Hinweises auf die Patenterteilung:
**08.09.1999 Patentblatt 1999/36**

(51) Int. Cl.$^6$: **C08G 77/06**, B01D 19/04, C08L 83/04

(21) Anmeldenummer: **94119643.8**

(22) Anmeldetag: **13.12.1994**

(54) **Flüssige Polysiloxane**

Liquid polysiloxanes

Polysiloxanes liquides

(84) Benannte Vertragsstaaten:
**BE DE ES FR GB IT NL**

(30) Priorität: **27.12.1993 DE 4344663**

(43) Veröffentlichungstag der Anmeldung:
**05.07.1995 Patentblatt 1995/27**

(73) Patentinhaber:
**Wacker-Chemie GmbH
81737 München (DE)**

(72) Erfinder:
• **Rautschek, Holger, Dr. rer. nat.
D-01612 Nünchritz (DE)**
• **Gühne, Rosemarie
D-01445 Radebeul (DE)**
• **Schickman, Harald
D-01662 Meissen (DE)**

(74) Vertreter: **Zöllner, Gudrun
Chemiewerk Nünchritz GmbH
D-01610 Nünchritz (DE)**

(56) Entgegenhaltungen:
**EP-A- 0 163 398          EP-A- 0 270 273
FR-A- 2 396 577**

**Beschreibung**

Die Erfindung betrifft flüssige Polysiloxane sowie deren Herstellung. Flüssige Polysiloxane werden bevorzugt in Entschäumerzubereitungen, als diffusionsfeste Weichmacheröle, Trennmittel oder Imprägniermittel eingesetzt.

Polyorganosiloxane, die neben mono- und difunktionellen Siloxaneinheiten auch tri- und tetrafunktionelle Siloxanbausteine enthalten, sind Gegenstand zahlreicher Erfindungen. Bevorzugtes Anwendungsgebiet für diese Art Polysiloxane sind Entschäumerzubereitungen. So beschreibt US 4 145 308 beispielsweise eine Entschäumerzubereitung, die neben einem Polydiorganosiloxan und Kieselsäure noch ein Copolymeres aus $(CH_3)_3SiO_{1/2}$- und $SiO_2$-Bausteinen enthält.

EP 163 541 lehrt die Herstellung einer Entschäumerzubereitung mit verbesserter Langzeitwirkung durch katalytische Umsetzung von trimethylsiloxyterminierten Polydimethylsiloxanen, hydroxylterminierten Polydimethylsiloxanen, einem Alkoxysilan bzw. Siloxan oder einem Kopolymeren aus $(CH_3)_3SiO_{1/2}$- und $SiO_2$-Bausteinen sowie einem Füllstoff in Gegenwart eines Katalysators. Als Katalysatoren werden Basen oder metallorganische Verbindungen erwähnt. Die Kieselsäure als Füllstoff wird dabei, wie in DD-PS 56 762 beschrieben, hydrophobiert. Die gesamte Reaktionsdauer beträgt bei 120 bis 180°C mehr als 4 Stunden. EP 270 273 betrifft ein analoges Verfahren.

Die Herstellung eines Entschäumers durch Vermischen von hydrophober Kieselsäure mit einem Polysiloxan, das durch alkalisch katalysierte Reaktion bei Temperaturen von über 120°C aus trimethylsilylterminierten Polydimethylsiloxanen, hydroxylterminierten Polydimethylsiloxanen und einem Copolymeren aus $(CH_3)_3SiO_{1/2}$- und $SiO_2$-Bausteinen hergestellt wurde, beschreibt EP 217 501. Dadurch soll die Wirksamkeit des Entschäumers bei hohen Konzentrationen an anionischen Tensiden verbessert werden.

Allen bekannten Verfahren zur Herstellung von bei 25°C flüssigen Polysiloxanen, die bevorzugt als Entschäumer zum Einsatz kommen, ist gemeinsam, daß als Ausgangsstoffe höhermolekulare Polysiloxane verwendet werden, die zuvor aus niedermolekularen, durch Hydrolyse von Methylchlorsilanen zugänglichen Siloxanen in einem zusätzlichen, vorgelagerten Schritt hergestellt werden müssen.

Es war demnach Aufgabe der Erfindung, bei 25°C flüssige Polysiloxane zur Verfügung zu stellen, deren Herstellung rationeller und effektiver ist. Der Einsatz von Verbindungen, die durch zusätzliche Polymerisations- bzw. Polykondensationsprozesse bereitgestellt werden müssen, soll vermieden werden. Diese flüssigen Polysiloxane sollen vorrangig in Entschäumerzubereitungen einsetzbar sein.

Diese Aufgaben werden von der Erfindung gelöst, indem

(1) 100 Teile des Hydrolyseproduktes von Dimethyldichlorsilan einer Viskosität kleiner 200 $mm^2/s$, vorzugsweise kleiner 100 $mm^2/s$ bei 25 °C,

(2) 1 bis 100 Teile eines nichtcyclischen Polydiorganosiloxanes einer Viskosität kleiner 200 $mm^2/s$, vorzugsweise kleiner 50 $mm^2/s$ bei 25 °C, der allgemeinen Formel

$$R^1{}_a SiO_{(4-a)/2} \qquad (I),$$

wobei $R^1$ gleiche oder verschiedene, substituierte und/oder unsubstituierte Kohlenwasserstoffreste mit 1 bis 30 Kohlenstoffatomen darstellt und a im Mittel einen Wert von 1,9 bis 3,0 hat,

(3) 0,1 bis 20 Teile einer Verbindung ausgewählt aus einer oder mehreren Verbindungen a) bis d)

a) einer Siliciumverbindung der allgemeinen Formel

$$R^2{}_b SiX_{(4-b)} \qquad (II),$$

wobei $R^2$ ein substituierter und/oder unsubstituierter Kohlenwasserstoffrest mit 1 bis 10 Kohlenstoffatomen und X eine hydrolysierbare Gruppe darstellen und b einen Wert zwischen 0 und 1 annimmt,
b) einem Teilhydrolysat von a),
c) einem Siliconharz, im wesentlichen bestehend aus $(CH_3)_3SiO_{1/2}$- und $SiO_2$-Einheiten, wobei das Verhältnis von $(CH_3)_3SiO_{1/2}$- zu $SiO_2$-Einheiten 2 zu 1 bis 1 zu 2 beträgt,
d) einer hydrophilen pyrogenen oder gefällten Kieselsäure mit einer BET-Oberfläche von 50 bis 400 $m^2/g$

in Gegenwart einer katalytisch wirksamen Menge eines die Reaktion der Verbindungen (1) bis (3) beschleunigenden Katalysators umgesetzt werden.

Als Verbindung (1) werden bevorzugt die cyclischen Anteile des Hydrolyseproduktes von Dimethyldichlorsilan der allgemeinen Formel

$$[(CH_3)_2SiO]_m \qquad\qquad (III),$$

wobei m eine Zahl von 3 bis 12 ist,

die linearen Anteile des Hydrolyseproduktes von Dimetyldichlorsilan der allgemeinen Formel

$$HO[Si(CH_3)_2O]_nH \qquad\qquad (IV)$$

und einer Viskosität von 20 bis 200 mm$^2$/s bei 25 °C, oder ein Gemisch aus linearen und cyclischen Anteilen eingesetzt.

Als Polydiorganosiloxane (2) werden vorzugsweise trimethylsiloxyterminierte Polydimethylsiloxane, insbesondere mit Viskositäten kleiner 50 mm$^2$/s bei 25 °C, verwendet, beispielsweise Hexamethyldisiloxan. Trimethylsiloxyterminierte Polydimethylsiloxane hoher Viskosität bringen keine Vorteile, da sie zur Gewährleistung des gleichen Verhältnisses von M- zu D-Einheiten in größeren Mengen zugegeben werden müßten.

Obwohl Polydimethylsiloxane als Verbindung (2) bevorzugt sind, kann es günstig sein, einen Teil der Methylgruppen durch andere organische Gruppen zu ersetzen, z. B. durch Alkylgruppen mit 2 bis 10 Kohlenstoffatomen, durch substituierte Alkylgruppen, z. B. Perfluorpropylgruppen, oder durch Polyetherpropylgruppen. Derartige Gruppen sind insbesondere dann günstig, wenn das erfindungsgemäße flüssige Polysiloxan bei der Anwendung mit Stoffen oder Werkstücken in Berührung kommt, die in der weiteren Bearbeitung verklebt oder lackiert werden sollen.

Als Verbindungen (3) werden bevorzugt Siliciumverbindungen der allgemeinen Formel $R^2{}_bSiX_{(4-b)}$(II), wobei X Alkoxygruppen mit 1 bis 4 Kohlenstoffatomen, Acyloxygruppen mit 2 bis 10 Kohlenstoffatomen, Oximogruppen mit 3 bis 10 Kohlenstoffatomen oder Halogen bedeutet, eingesetzt, beispielsweise Tetrachlorsilan, Methyltrichlorsilan, Tetraalkoxysilane, wie z.B. Tetraethoxysilan, Alkyltrialkoxysilane, wie z.B. Methyltriethoxysilan, Methyltrimethoxysilan, Vinyltrimethoxysilan, Octyltriethoxysilan, Methacrylpropyltriethoxysilan, Glycidoxypropyltriethoxysilan, Aminopropyltriethoxysilan, Methyltriacetoxysilan, Methyltributanonoximosilan, Vinyltributanonoximosilan und andere ähnliche, dem Fachman bekannte Verbindungen. Ebenfalls vorteilhaft ist die Verwendung der Teilhydrolysate dieser Organosiliciumverbindungen. Die Teilhydrolysate bilden sich durch Umsetzung der Verbindungen der allgemeinen Formel (II) mit Wasser, beispielsweise bei Gegenwart von Luftfeuchtigkeit. Sie sind jedoch auch gezielt nach bekannten Verfahren herstellbar, üblicherweise durch Umsetzung mit wäßrigen Alkoholen, ggf. in Gegenwart von sauren oder basischen Katalysatoren. Der Hydrolysegrad (Anteil der abgespaltenen Gruppen X) kann bis zu 90 % betragen.

Der Einsatz von Siliconharzen, die im wesentlichen aus $(CH_3)_3SiO_{1/2}$- und $SiO_2$-Einheiten im Verhältnis von $(CH_3)_3SiO_{1/2}$- zu $SiO_2$-Einheiten von 2 zu 1 bis 1 zu 2 bestehen, ist ebenfalls möglich. Diese Harze können außerdem siliciumgebundene Hydroxyl- und/oder Alkoxygruppen enthalten. Derartige Produkte sind dem Fachmann als QM-Harze bekannt. Ein gewisser Gehalt an $(CH_3)_2SiO_{2/2}$- oder $CH_3SiO_{3/2}$-Einheiten in diesen Harzen ist nicht störend.

Die Verwendung von pyrogenen oder gefällten amorphen hydrophilen Kieselsäuren als Reaktionspartner ist ebenfalls möglich.

Die Umsetzung der Verbindungen (1) bis (3) erfolgt in Gegenwart von Katalysatoren, welche die Polykondensation, Polymerisation und/oder Äquilibrierung von Polysiloxanen beschleunigen. Typische Vertreter sind z. B. Natrium- oder Kaliumhydroxid, Natrium- oder Kaliumsilanolate bzw.-siloxanolate, Tetraalkylammonium- und Tetraalkylphosphoniumsiloxanolate, Schwefelsäure, saure Ionenaustauscher, metallorganische Verbindungen, Trifluormethansulfonsäure und Phosphornitrilchloride. Je nach Art des Katalysators werden 1 ppm bis 2 Gew.-% eingesetzt.

Bevorzugte Katalysatoren sind Phosphornitrilhalogenide der allgemeinen Formel (V) $(PX_2=N)_ePX_3^+ (MY_{(w-f+1)}R_f)^-$, wobei X und Y Halogene, M ein Element mit einer Elektronegativität von 1,0 bis 2,2 auf der Pauling-Skala und R ein Kohlenwasserstoffrest mit 1 bis 10 Kohlenstoffatomen darstellen, e einen Wert von 1 bis 6 hat, w die Wertigkeit oder der Oxidationszustand von M ist und f einen Wert von 0 bis (w-1) hat. Üblicherweise bedeuten X und Y Chlor sowie M Phosphor, e stellt einen Wert zwischen 1 und 3 und f einen Wert von 0 dar.

Ebenfalls als Katalysatoren mit gutem Ergebnis einsetzbar sind Umsetzungsprodukte von Phosphornitrilchlorid mit Verbindungen der allgemeinen Formel

$$[R_3SiO(R_2SiO)_m]_3P=O \qquad\qquad (VI),$$

worin R unabhängig voneinander gleiche oder verschiedene, ungesättigte und/oder gesättigte einwertige Kohlenwasserstoffreste mit 1 bis 6 Kohlenstoffatomen oder Wasserstoff mit der Maßgabe bedeuten, daß nur ein Wasserstoffatom pro Silicium gebunden ist und m einen Wert zwischen 0 und 100 annimmt, wobei sich während der Umsetzung bildende, leichtflüchtige Chlor-Silicium-Verbindungen vollständig oder teilweise abgetrennt werden können, um den Chlorgehalt des Katalysators zu vermindern.

Die eingesetzte Verbindung der allgemeinen Formel

$$[R_3SiO(R_2SiO)_m]_3P=O \qquad (VI),$$

kann beispielsweise erhalten werden in Anlehnung an DE 43 23 183. Im Fall von m = 0 [Tris(triorganosilyl)phosphat] werden dabei Triorganohalogensilan, wie z. B. Trimethylchlorsilan oder Dimethylvinylchlorsilan, und Orthophosphorsäure in äquivalenten Mengen umgesetzt, wobei in der Orthophosphorsäure enthaltenes Wasser durch das Triorganohalogensilan gebunden wird. Zur Herstellung der Verbindung mit m größer 0, wobei m ganze oder gebrochenen Zahlen annehmen kann [Tris(triorganosiloxypolydiorganosiloxanyl)phosphat], wird das erhaltene Tris(triorganosilyl)phosphat mit einem oder mehreren Organocyclosiloxanen der allgemeinen Formel $(R_2SiO)_q$, worin R unabhängig voneinander gleiche oder verschiedene gesättigte und/oder ungesättigte einwertige Kohlenwasserstoffreste mit 1 bis 6 Kohlenstoffatomen bedeutet und q Werte von 3 bis 6 annimmt, umgesetzt. Es ist jedoch auch möglich die Verbindung der allgemeinen Formel (VI) nach jedem anderen bekannten Verfahren herzustellen.

Phosphornitrilchloride oder desses Umsetzungsprodukte werden als Katalysatoren in Mengen von 1 bis 50 ppm, vorzugsweise in Mengen von 1 bis 25 ppm, bezogen auf die eingesetzte Menge an Phosphornitrilchlorid, verwendet.

Es können ein oder mehrere Katalysatoren verwendet werden. So ist es möglich, die Verbindungen (1) bis (3) zu vermischen und bei Raumtemperatur die Kondensationsreaktion mit einer metallorganischen Verbindung zu starten. Dabei ist die Verwendung von Silanen der allgemeinen Formel $R^2_b SiX_{(4-b)}$ (II) als Verbindung (3) besonders günstig. Nach einer Reaktionszeit, wo vor allem die Heterokondensation der SiOH-Gruppen der Verbindung (1) mit den Si-X-Gruppen der Verbindung (3) erfolgt, wird ein Kondensationskatalysator zugesetzt, der die Polykondensation der Verbindung (1) und eine Äquilibrierung der Komponente (2) bewirkt, beispielsweise Kaliumsilanolat.

Die Reihenfolge, in welcher die einzelnen Verbindungen miteinander vermischt und anschließend umgesetzt werden, ist beliebig. Beispielsweise ist es möglich, die gewünschten Verbindungen (1) bis (3) zu vermischen, auf die gewünschte Temperatur zu erhitzen und erst dann einen Katalysator zuzusetzen.

Die Umsetzung ist sowohl kontinuierlich als auch diskontinuierlich durchführbar. Die Reaktionstemperatur und der bei der Umsetzung herrschende Druck sind von Art und Zusammensetzung der eingesetzten Verbindungen abhängig. Im allgemeinen wird die Reaktion bei Temperaturen zwischen 50 und 200 °C, vorzugsweise zwischen 70 und 150 °C, insbesondere zwischen 70 and 120°C, und bei Drücken von 0,1 kPa bis Normaldruck, vorzugsweise von 1 bis 10 kPa durchgeführt.

Die Reaktionsdauer bei diskontinuierlicher Verfahrensweise beträgt einige Minuten bis wenige Stunden. Kurze Reaktionszeiten können bei der kontinuierlichen Umsetzung, beispielsweise in einem Dünschichtverdampfer, erreicht werden, wobei der Einsatz des linearen Anteils des Dimethylchlorsilan-Hydrolyseproduktes als Verbindung (1) in Kombination mit einem Phosphor und Stickstoff enthaltenden Katalysator, wie z. B. Phosphornitrilchlorid, besonders bevorzugt ist.

Nach Beendigung der Umsetzung, üblicherweise bei konstant bleibender Viskosität, wird der Katalysator mit Hilfe bekannter Neutralisationsmittel und Verfahren desaktiviert. So können basische Katalysatoren beispielsweise mit Phosphorsäure, Kieselsäure oder Tris(trimethylsilyl)phosphat und saure Katalysatoren mit tertiären Aminen, wie Triisooctylamin, neutralisiert werden. Tetraalkylphosphonium- bzw. Tetraalkylammoniumsilanolat können durch Erhitzen desaktiviert werden.

Die Neutralisation der bevorzugten Phosphor und Stickstoff enthaltenden Katalysatoren kann mit Aminen, vorzugsweise tertären Aminen mit langen Alkylgruppen, Aminosilanen oder -siloxanen, Epoxiden, Vinylethern, Lithiumalkylen, Alkalisilanolaten bzw. -siloxanolaten erfolgen. Aber auch feste alkalische Verbindungen wie Magnesiumoxid können die Desaktivierung von Phosphor und Stickstoff enthaltenden Katalysatoren bewirken.

Nach der Neutralisation des Katalysators kann es vorteilhaft sein, die erfindungsgemäßen flüssigen Polysiloxane von den letzten Spuren flüchtiger Verbindungen zu befreien, beispielsweise durch weiteres Erhitzen bei vermindertem Druck.

Die Herstellung der erfindungsgemäßen flüssigen Polysiloxane gestattet es, von kostengünstigen Rohstoffen auszugehen. Indem niedermolekulare Siloxane eingesetzt werden können, entfällt die zusätzliche Herstellung höhermolekularer Verbindungen als Ausgangsstoffe. Die in den erfindungsgemäßen Polysiloxanen, bedingt durch die niedermolekularen Ausgangsstoffe, enthaltenen häufigen Verzweigungen bewirken eine ausgezeichnete Detergenzienfestigkeit der damit hergestellten Entschäumer bei der Anwendung in Waschmitteln.

Ein bevorzugtes Anwendungsgebiet der erfindungsgemäßen flüssigen Polysiloxane ist der Einsatz in Entschäumerzubereitungen. Die Herstellung der Entschäumerzubereitungen erfolgt vorzugsweise durch Einmischen von hydrophoben feinverteilten Feststoffen (wie z. B. Aluminiumoxid, Siliciumdioxid, PTFE, Polyurethan) nach bekannten Verfahren in die erfindungsgemäßen Polysiloxane. Dabei ist die Verwendung handelsüblicher, hydrophober, pyrogener oder gefällter Kieselsäuren mit einer BET-Oberfläche von 50 bis 400 $m^2$/g besonders bevorzugt. Hydrophobe Feststoffen können beispielsweise zuerst in Polydimethylsiloxanen oder einem anderen Trägermedium dispergiert und anschließend mit den erfindungsgemäßen flüssigen Polysiloxanen vermischt werden.

Vorzugsweise enthalten die Entschäumerzubereitungen mindestens 10 Gew.-%, üblicherweise mindestens 40 Gew.-% der erfindungsgemäßen flüssigen Polysiloxane. Für bestimmt Anwendungen, beispielsweise zur Entschäumung von Mineralölen, können die erfindungsgemäßen flüssigen Siloxane, ggf. als Mischung mit anderen Polydiorganosiloxanen, ohne weiteren Zusatz direkt als Entschäumer oder Schauminhibitor eingesetzt werden.

Eine Variante zur Herstellung von Entschäumerzubereitungen unter Einsatz der erfindungsgemäßen flüssigen Polysiloxane ist die in situ-Hydrophobierung von hydrophiler Kieselsäure. Eine Mischung aus den erfindungsgemäßen flüssigen Polysiloxanen und hydrophiler Kieselsäure wird unter Einwirkung von Scherkräften auf Temperaturen von 100 bis 200°C über einen Zeitraum, der mehrere Stunden betragen kann, erhitzt. Dabei werden zur Hydrophobierung der Kieselsäure weitere flüssige Silane oder Siloxane zugegeben. Diese Reaktion kann durch Katalysatoren, wie z. B. Kaliumsilanolat, unterstützt werden. Die in situ-Hydrophobierung kann natürlich auch in jedem anderen geeigneten Polysiloxan erfolgen; die erhaltene Dispersion wird dann anschließend mit dem erfindungsgemäßen flüssigen Polysiloxan vermischt. Auch Katalysatoren, die zur Herstellung der erfindungsgemäßen flüssigen Polysiloxane eingesetzt wurden, können dafür ohne vorherige Neutralisation bzw. Desaktivierung weiterverwendet werden. Beispielsweise kann bei Verwendung von basischen Katalysatoren für die in situ-Hydrophobierung bei der Herstellung der erfindungsgemäßen flüssigen Polysiloxane in Gegenwart des bevorzugten Phosphor und Stickstoff enthaltenden Katalysators auf dessen vorherige Desaktivierung verzichtet werden. Der Anteil an hydrophober bzw. in situ-hydrophobierter Kieselsäure in den Entschäumern beträgt 1 bis 20 Gew.-%, vorzugsweise 2 bis 12 Gew.-%. Weiterhin können den Entschäumerzubereitungen bei Verwendung der erfindungsgemäßen flüssigen Polysiloxane zur Erzielung spezieller Eigenschaften weitere bekannte Stoffe, wie z. B. QM-Harze, lineare oder cyclische Siloxane einer Viskosität von 0,65 bis mehreren Millionen $mm^2$/s bei 25 °C, polyethermodfizierte Polysiloxane, Fettalkohole, Wachse, Mineralöle, fette Öle, Fettsäuren und/oder Tenside, zugesetzt werden.

Die Anwendung der aus den erfindungsgemäßen Polysiloxanen hergestellten Entschäumer kann überall dort erfolgen, wo Schaumprobleme auftreten, z. B. bei der Erdölförderung und -verarbeitung, bei der Abwasserbehandlung, in der chemischen Industrie, bei der Herstellung und Verarbeitung von Lebensmitteln und pharmazeutischen Produkten, bei Reinigungsprozessen und in Waschmitteln. Während für nichtwäßrige Systeme, z. B. Erdöl, die Entschäumer als 100%iges Produkt bzw. als Lösung in einem organischem Lösungsmittel verwendet werden können, ist bei der Bekämpfung von Schäumen in wäßrigen Systemen die Anwendung in Form einer Emulsion bevorzugt. Aber auch selbstemulgierende Formulierungen, z. B. flüssige Waschmittel, oder pulverförmige Produkte, z. B. Waschpulver, können Entschäumer auf Grundlage der erfindungsgemäßen Polysiloxane enthalten. Die Herstellung von Emulsionen sowie selbstemulgierenden oder pulverförmigen Entschäumerformulierungen ist Stand der Technik und kann in bekannter Weise erfolgen. Bei der Herstellung von Emulsionen erweisen sich die erreichbaren niedrigen Viskositäten der erfindungsgemäßen Polysiloxane von Vorteil.

Die erfindungsgemäßen flüssigen Polyosiloxane können ebenfalls für andere Anwendungen, z.B. als diffusionsfeste Weichmacheröle, als Vernetzer für kondensationsvernetzenden und additionsvernetzenden Siliconkautschuk (je nach den funktionellen Gruppen, die diese Silane/Siloxane tragen), Trennmittel oder Imprägniermittel, eingesetzt werden.

### Ausführungsbeispiele

### Beispiele 1 bis 6

100 Teile des linearen Anteils des Hydrolyseproduktes von Dimethyldichlorsilan (oligomeres $\alpha,\omega$-Dihydroxydimethylsiloxan) einer Viskosität von 70 $mm^2$/s bei 25 °C, 21 Teile eines trimethylsilylterminierten Oligodimethylsiloxans einer Viskosität von 50 $mm^2$/s sowie eine Menge eines Siloxans vom Typ der Verbindung (3) wurden auf 100°C erhitzt. Bei dieser Temperatur wurden, bezogen auf das Gewicht der eingesetzten Menge an Siloxanen, 10 ppm Phosphornitrilchlorid (hergestellt aus 1 mol Ammoniumchlorid und 2 mol Phosphorpentachlorid in Anlehnung an US 3 839 388) gelöst in Methylenchlorid, zugegeben. Anschließend wurde der Druck langsam auf 20 kPa gesenkt. Nach 10 Minuten erfolgte durch Zugabe von 30 ppm Triisooctylamin die Neutralisation des Katalysators und damit der Abbruch der Reaktion.

Menge und Typ der Verbindung (3) sowie Viskosität der hergestellten Polysiloxane sind in Tabelle 1 angegeben.

Tabelle 1

| Beispiel Nr. | Siloxan (3) | Viskosität bei 25 °C mm$^2$/s |
|---|---|---|
| 1 | 1 Teil Methyltrimethoxysilan | 2 900 |
| 2 | 2 Teile Methyltrimethoxysilan | 1 000 |
| 3 | 1 Teil Vinyltrimethoxysilan | 3 200 |
| 4 | 1 Teil Octyltriethoxysilan | 758 |
| 5 | 1 Teil Tetraethoxysilan | 3 250 |
| 6[A] | 2 Teile Octyltrichlorsilan | 2 060 |

[A] Als Katalysator wurden eingesetzt: 0,25 Teile des Umsetzungsproduktes von 5 Teilen Phosphornitrilchlorid mit 80 Teilen eines Reaktionsproduktes aus einem Teil Tris(trimethylsilyl)phosphat und neun Teilen Octamethylcyclotetrasiloxan, gelöst in 915 Teilen eines Gemisches aus cyclischen Dimethyloligosiloxanen. Die Desaktivierung des Katalysators erfolgte mit 60 ppm Triisooctylamin.

Beispiel 7

100 Teile des cyclischen Anteils des Hydrolyseproduktes von Dimethyldichlorsilan (Gemisch aus cyclischen Dimethylsiloxanen der allgemeinen Formel (III), wobei m Werte zwischen 3 und 7 annimmt) und 10 Teile eines trimethylsiloxyterminierten Oligodimethylsiloxans einer Viskosität von 40 mm$^2$/s wurden mit 2 Teilen Methyltrimethoxysilan unter Rückfluß auf 130 °C erhitzt. Nach Zugabe von 200 ppm KOH wurde 5 Stunden weiter erhitzt und anschließend die Reaktion durch Neutralisation mit 200 ppm Phosphorsäure abgebrochen. Die Entfernung der flüchtigen Bestandteile erfolgte destillativ.
Das hergestellte Polysiloxan wies eine Viskosität von 106 mm$^2$/s auf, die mittlere Molmasse $M_w$ betrug 16 500 g. Damit liegt die Viskosität deutlich unter der von linearen Polysiloxanen gleicher Molmasse (170 mm$^2$/s).

Beispiel 8

Durchführung analog Beispiel 7. Anstatt KOH wurde Tetramethylammoniumsilanolat als Katalysator verwendet. Die Desaktivierung des Katalysators erfolgte durch einstündiges Erhitzen auf 190 °C. Anschließend wurden die flüchtigen Bestandteile abgetrennt.
Das erhaltene Polysiloxan wies eine Viskosität von 122 mm$^2$/s auf, die mittleren Molmasse $M_w$ betrug 16 400 g.

Beispiel 9

100 Teile des Hydrolyseproduktes von Dimethyldichlorsilan (Gemisch aus 59 Gew.-% linearen und 41 Gew.-% cyclischen Siloxanen), 10 Teile trimethylsiloxyterminiertes Oligodimethylsiloxan und 2,5 Teile einer 60%igen xylolischen Lösung eines Methylsiliconharzes aus $(CH_3)_3SiO_{1/2}$- und $SiO_{4/2}$-Einheiten im Verhältnis 0,8 zu 1 wurden auf 100 °C erhitzt. Als Katalysator wurden eingesetzt: 0,225 Teile eines Umsetzungsproduktes von 2,3 Teilen KOH mit 97,7 Teilen eines Gemisches aus cyclischen Dimethylsiloxanen. Nach Zugabe des Katalysators wurde 6 Stunden bei 130 °C gerührt und anschließend die Reaktion durch Zugabe von 0,04 Teilen konzentrierter Phosphorsäure beendet. Danach erfolgte die Abtrennung der flüchtigen Bestandteile.
Die Viskosität des erhaltenen Polydimethylsiloxans betrug 2 150 mm$^2$/s, die mittlere Molmasse $M_w$ 91 000 g/mol. Ein lineares Polydimethylsiloxan dieser Molmasse würde eine Viskosität größer 10 000 mm$^2$/s aufweisen.

Beispiel 10

Herstellung des Katalysators:

5,6 g Phosphornitrilchlorid wurden mit 3,53 g Tris(trimethylsilyl)phosphat vermischt und 0,5 Stunden bei einer Temperatur von 60 °C gerührt. Das erhaltene Produkt wurde mit 1110,9 g cyclische Polydimethylsiloxanen vermischt.

Der anwendungsbereite Katalysator hatte eine Konzentration von 0,5 Gew.-%, bezogen auf das umgesetzte Phosphornitrilchlorid.

Es wurden 1,4 kg/h eines Gemisches aus 100 Teilen des linearen Anteils des Hydrolseproduktes von Dimethyldichlorsilan ($\alpha$,$\omega$-Dihydroxydimethylsiloxan) einer Viskosität von 70 mm$^2$/s, 20 Teilen eines trimethylsilylterminierten Polydimethylsiloxan einer Viskosität von 50 mm$^2$/s und 2 Teilen Methyltrimethoxysilan in einem statischen Mischer mit 28 ml/h des Katalysators vermischt und anschließend kontinuierlich in einen Labordünnschichtverdampfer (Verdampferfläche 0,06 m$^2$) bei einer Temperatur von 90 °C und einem Druck von 1 kPa eingespeist. Nach der Austragsschnecke des Labordünnschichtverdampfers erfolgte in einem weiteren statischen Mischer die Neutralisation des Katalysators mit 30 ppm Triisooctylamin. Das hergestellte Polysiloxan wies eine Viskosität von 6 900 mm$^2$/s auf.

Der Einbau der tri- bzw. tetrafunktionellen Einheiten konnte durch Gelpermeationschromatographie festgestellt werden. Im Vergleich zu linearen Produkten wiesen die Chromatogramme eine Verbreiterung der Molekulargewichtsverteilung, die Ausbildung von Schultern sowie eine höhere mittlere Molmasse $M_w$ aus.

Beispiel 11

Herstellung des Katalysators:

5,6 g Phosphornitrilchlorid wurden mit 2,24 g Tris(trimethylsilyl)phosphat vermischt und 0,5 Stunden bei einer Temperatur von 60 °C gerührt. Anschließend wurden bei einer Temperatur von 60 °C und einem Druck von 12 mbar 1,3 g Trimethylchlorsilan abdestilliert. Das erhaltene Produkt wurde mit 113,5 g cyclischen Polydimethylsiloxanen vermischt. Der anwendungsbereite Katalysator hatte eine Konzentration von 0,5 Gew.-%, bezogen auf das umgesetzte Phosphornitrilchlorid. 400 Teile des nichtflüchtigen Anteils des Hydrolyseproduktes von Dimethyldichlorsilan, 40 Teile trimethylsiloxyterminiertes, oligomeres Dimethylsiloxan einer Viskosität von 40 mm$^2$/s, 4 Teile Methyltrimethoxysilan und 1 Teil des Katalysators wurden auf 100 °C erhitzt. Im Verlauf von 20 Minuten wurde der Druck auf 35 mbar abgesenkt. Danach erfolgte die Neutralisation des Katalysators mit 0,03 Teilen Triisooctylamin.

Das erhaltene Polysiloxan wies eine Viskosität von 19 000 mm$^2$/s auf.

Anwendung der Polysiloxane als Entschäumer

In 190 g des erfindungsgemäßen Polysiloxans wurden 10 g hydrophobe gefüllte Kieselsäure mit einer BET-Oberfläche von 90 m$^2$/g 30 Minuten mittels einer Dissolverscheibe bei 1900 U/min untergemischt.

Testung der Entschäumer

Test A

Test A beschreibt die Wirksamkeit der Entschäumer in Gegenwart von stark schäumenden anionischen Tensiden.

In einem 1l-Becherglas (hohe Form) wurden 300 ml einer 0,1%igen Natriumdodecylsulfatlösung bei 25 ± 1 °C mit einem Käfigrührer bei 1300 U/min 3 Minuten aufgeschäumt. Nach 1 Minute Standzeit wurde die Schaumhöhe $H_A$ gemessen. Dann wurden 10 mg des zu prüfenden Entschäumers gelöst in 1ml Butanon zugegeben und 1 Minute eingerührt und nach 1 Minute Standzeit die verbleibende Restschaumhöhe $H_E$ gemessen.

Der Grad der Entschäumung der ein Maß für die Wirksamkeit des Entschäumers darstellt wurde wie folgt berechnet:

$$E \text{ (in\%)} = (H_A - H_E)/H_A * 100$$

Test B

Test B beschreibt die Wirksamkeit der Entschäumer in Gegenwart von hohen Konzentrationen an nichtionischen Tensiden. In einem 1l-Becherglas (hohe Form) wurden 300 ml einer 4%igen wäßrigen Lösung von Dekaoxyethylentridecylalkohol bei 25 ± 1°C mit einem Käfigrührer bei 1300 U/min 3 Minuten aufgeschäumt. Nach 1 Minute Standzeit wurde die Schaumhöhe $H_0$ gemessen. Anschließend wurden 10 mg des zu prüfenden Entschäumers, gelöst in 1 ml Butanon, zugegeben, 1 Minute eingerührt und wiederum die Schaumhöhe $H_1$ gemessen. Im Abstand von jeweils 1 Minute wurde die verbleibende Restschaumhöhe über einen Zeitraum von insgesamt 10 Minuten verfolgt ($H_2$ bis $H_{10}$).

Der Schaumhöhen-Zeit-Verlauf wurde graphisch dargestellt und die Fläche (Integral der Schaumhöhe über die Zeit) berechnet ($I_E$). Der Versuch wurde ohne Entschäumer wiederholt, woraus sich das Schaumhöhen-Zeit-Integral $I_A$ ergibt.

Der Grad der Entschäumung der ein Maß für die Wirksamkeit des Entschäumers darstellt wird wie folgt berechnet:

$$E\ (in\%) = (I_A - I_E)/I_A * 100$$

Die Ergebnisse sind in Tabelle 2 dargestellt.

Tabelle 2

| Beispiel | Test A | Test A nach 8 Wochen | Test B |
|---|---|---|---|
| 1 | 94 | 94 | 79 |
| 2 | 95 | 94 | 82 |
| 3 | 88 | 88 | 78 |
| 4 | 91 | 90 | 76 |
| 5 | 90 | 80 | 65 |
| 6 | 92 | 93 | 88 |
| 7 | 94 | 94 | 69 |
| 8 | 94 | 92 | 76 |
| 9 | 89 | 88 | 76 |
| 10 | 86 | 85 | 78 |
| 11 | 92 | 90 | 88 |

Aus Tabelle 2 ist ersichtlich, daß die mit den erfindungsgemäßen flüssigen Polysiloxanen hergestellten Entschäumer eine sehr gute Wirksamkeit aufweisen.

Anwendung der Polysiloxane als Entschäumeremulsion

Aus dem Entschäumer mit dem Polysiloxan von Beispiel 2 wurde eine Emulsion mit 10 Gew.-% Silicon unter Verwendung von je 3 Gew.-% Sorbitanmonostearat und Polyoxyethylen-(40)-stearat hergestellt. Die Prüfung erfolgte analog Test A bzw. Test B, nur daß statt 10 mg 100%iger Entschäumer 100 µl 10%ige Entschäumeremulsion eingesetzt wurden. Folgendes Ergebniss wurde erzielt:

Tabelle 3

|  | Test A | Test B |
|---|---|---|
| Siloxan aus Bsp.2 | 94 | 95 |

Mit diesem Beispiel wird nachgewiesen, daß die erfindungsgemäßen flüssigen Polysiloxane auch als Entschäumeremulsion mit gutem Ergebnis einsetzbar sind.

**Patentansprüche**

1. Bei 25°C flüssige Polysiloxane, erhalten durch Umsetzung von

(1) 100 Teilen des Hydrolyseproduktes von Dimethyldichlorsilan einer Viskosität kleiner 200 mm$^2$/s bei 25 °C,
(2) 1 bis 100 Teilen eines nichtcyclischen Polydiorganosiloxanes einer Viskosität kleiner 200 mm$^2$/s bei 25 °C der allgemeinen Formel

$$R^1{}_a SiO_{(4-a)/2} \qquad (I),$$

wobei $R^1$ gleiche oder verschiedene, substituierte und/oder unsubstituierte Kohlenwasserstoffreste mit 1 bis 30 Kohlenstoffatomen darstellt und a im Mittel einen Wert von 1,9 bis 3,0 hat,

(3) 0,1 bis 20 Teilen einer Verbindung ausgewählt aus, einer oder mehreren Verbindungen a) bis d)

    a) einer Siliciumverbindung der allgemeinen Formel

$$R^2{}_b SiX_{(4-b)} \qquad (II),$$

wobei $R^2$ ein substituierter und/oder unsubstituierter Kohlenwasserstoffrest mit 1 bis 10 Kohlenstoffatomen und X eine hydrolysierbare Gruppe darstellen und b einen Wert zwischen 0 und 1 annimmt,

b) einem Teilhydrolysat von a),

c) einem Siliconharz, im wesentlichen bestehend aus $(CH_3)_3 SiO_{1/2}$- und $SiO_2$-Einheiten, wobei das Verhältnis von $(CH_3)_3 SiO_{1/2}$- zu $SiO_2$-Einheiten 2 zu 1 bis 1 zu 2 beträgt,

d) einer hydrophilen pyrogenen oder gefällten Kieselsäure mit einer BET-Oberfläche von 50 bis 400 $m^2/g$

in Gegenwart einer katalytisch wirksamen Menge eines die Umsetzung der Verbindungen (1) bis (3) beschleunigendem Katalysators.

2. Polysiloxane gemäß Anspruch 1, dadurch gekennzeichnet, daß die Verbindung (1) bei 25°C eine Viskosität kleiner 100 $mm^2/s$ aufweist.

3. Polysiloxane gemäß Anspruch 1, dadurch gekennzeichnet, daß als Verbindung (1) der cyclische Anteil des Hydrolyseproduktes von Dimethyldichlorsilan der allgemeinen Formel

$$[(CH_3)_2 SiO]_m \qquad (III),$$

wobei m eine Zahl von 3 bis 12 ist, eingesetzt wird.

4. Polysiloxane gemäß Anspruch 1, dadurch gekennzeichnet, daß als Verbindung (1) der lineare Anteil des Hydrolyseproduktes von Dimethyldichlorsilan der allgemeinen Formel

$$HO[(Si(CH_3)_2 O]_n H \qquad (IV)$$

und einer Viskosität von 20 bis 200 $mm^2/s$ bei 25 °C, eingesetzt wird.

5. Polysiloxane gemäß Anspruch 1, dadurch gekennzeichnet, daß als Verbindung (1) ein Gemisch aus linearen und cyclischen Anteilen des Hydrolyseproduktes von Dimethyldichlorsilan eingesetzt wird.

6. Polysiloxane gemäß Anspruch 1, dadurch gekennzeichnet, daß die Verbindung (2) bei 25°C eine Viskosität kleiner 50 $mm^2/s$ aufweist.

7. Polysiloxane gemäß Anspruch 1, dadurch gekennzeichnet, daß als Verbindung (2) Hexamethyldisiloxan eingesetzt wird.

8. Polysiloxane gemäß Anspruch 1, dadurch gekennzeichnet, daß als Verbindung (3) Alkyltrialkoxysilan und/oder Tetraalkoxysilan eingesetzt wird.

9. Polysiloxane gemäß nach Anspruch 1, dadurch gekennzeichnet, daß als Katalysator (4) ein Phosphornitrilhalogenid der allgemeinen Formel

$$(PX_2{=}N)_e PX_3{}^+ \, (MY_{(w-f+1)} R_f)^- \qquad (V)$$

eingesetzt wird, wobei X und Y Halogene, M ein Element mit einer Elektronegativität von 1,0 bis 2,2 auf der Pauling-Skala, R ein Kohlenwasserstoffrest mit 1 bis 10 Kohlenstoffatomen darstellen, e einen Wert von 1 bis 6 hat, w die Wertigkeit oder der Oxidationszustand von M ist und f einen Wert von 0 bis (w-1) hat.

10. Polysiloxane gemäß Anspruch 9, dadurch gekennzeichnet, daß X und Y Chlor und M Phosphor bedeuten, e einen Wert zwischen 1 und 3 und f einen Wert von 0 aufweisen.

**11.** Polysiloxane gemäß Anspruch 1, dadurch gekennzeichnet, daß als Katalysator das Umsetzungsprodukt von Phosphornitrilchlorid mit einer Verbindung der allgemeinen Formel

$$[R_3SiO(R_2SiO)_m]_3P{=}O \qquad\qquad (VI),$$

worin R unabhängig voneinander gleiche oder verschiedene, ungesättigte und/oder gesättigte einwertige Kohlenwasserstoffreste mit 1 bis 6 Kohlenstoffatomen oder Wasserstoff mit der Maßgabe bedeutet, daß nur ein Wasserstoffatom pro Silicium gebunden ist und m einen Wert zwischen 0 und 100 annimmt, eingesetzt wird.

**12.** Polysiloxane gemäß Anspruch 1 und 11, dadurch gekennzeichnet, daß als Katalysator das Umsetzungsprodukt von Phosphornitrilchlorid mit einer Verbindung der allgemeinen Formel

$$[R_3SiO(R_2SiO)_m]_3P{=}O \qquad\qquad (VI)$$

nach der vollständigen oder teilweisen Abtrennung sich während der Umsetzung bildender, leichtflüchtiger, Chlor enthaltender Silicium-Verbindungen eingesetzt wird.

**13.** Polysiloxane gemaß den Ansprüchen 1 bis 12, dadurch gekennzeichnet, daß die Umsetzung bei Temperaturen von 70 bis 120°C und Drücken von 1000 Pa bis Normaldruck erfolgt.

**14.** Polysiloxane gemäß den Ansprüchen 1 bis 12, dadurch gekennzeichnet, daß Temperatur und/oder Druckverhältnisse während der Umsetzung so gewählt werden, daß niedermolekulare Nebenprodukte entfernt werden.

**15.** Herstellung der flüssigen Polysiloxane gemäß Anspruch 1, dadurch gekennzeichnet, daß die Umsetzung in einem Dünnschichtverdampfer erfolgt.

**16.** Verwendung der flüssigen Polysiloxane gemäß Anspruch 1 in Entschäumerzubereitungen.

## Claims

**1.** Polysiloxanes which are liquid at 25°C, obtained by reacting

(1) 100 parts of the hydrolysis product of dimethyldichlorosilane having a viscosity of less than 200, $mm^2/s$ at 25°C,
(2) from 1 to 100 parts of an acyclic polydiorganosiloxane having a viscosity of less than 200 $mm^2/s$ at 25°C and having the general formula

$$R^1{}_aSiO_{(4-a)/2} \qquad\qquad (I),$$

where $R^1$ are identical or different, substituted and/or unsubstituted hydrocarbon radicals having from 1 to 30 carbon atoms and a has an average value of from 1.9 to 3.0,
(3) from 0.1 to 20 parts of a compound selected from among one or more compounds a) to d)

a) a silicon compound of the general formula

$$R^2{}_bSiX(4-b) \qquad\qquad (II),$$

where $R^2$ is a substituted and/or unsubstituted hydrocarbon radical having from 1 to 10 carbon atoms and X is a hydrolysable group and b assumes a value in the range from 0 to 1,
b) a partial hydrolysate of a),
c) a silicone resin consisting essentially of $(CH_3)_3SiO_{1/2}$ and $SiO_2$ units, where the ratio of $(CH_3)_3SiO_{1/2}$ to $SiO_2$ units is from 2:1 to 1:2,
d) a hydrophilic, pyrogenic or precipitated silica having a BET surface area of from 50 to 400 $m^2/g$

in the presence of a catalytically active amount of a catalyst which accelerates the reaction of the compounds (1) to (3).

**2.** Polysiloxanes according to Claim 1, characterized in that the compound (1) has a viscosity of less than 100 $mm^2/s$

at 25°C.

3. Polysiloxanes according to Claim 1, characterized in that the compound (1) used is the cyclic component of the hydrolysis product of dimethyldichlorosilane having the general formula

$$[(CH_3)_2SiO]_m \qquad (III),$$

where m is from 3 to 12.

4. Polysiloxanes according to Claim 1, characterized in that the compound (1) used is the linear component of the hydrolysis product of dimethyldichlorosilane having the general formula

$$HO[(Si(CH_3)_2O]_nH \qquad (IV)$$

and having a viscosity of from 20 to 200 mm²/s at 25°C.

5. Polysiloxanes according to Claim 1, characterized in that the compound (1) used is a mixture of linear and cyclic components of the hydrolysis product of dimethyldichlorosilane.

6. Polysiloxanes according to Claim 1, characterized in that the compound (2) used has a viscosity of less than 50 mm²/s at 25°C.

7. Polysiloxanes according to claim 1, characterized in that the compound (2) used is hexamethyldisiloxane.

8. Polysiloxanes according to Claim 1, characterized in that the compound (3) used is an alkyltrialkoxysilane and/or tetraalkoxysilane.

9. Polysiloxanes according to Claim 1, characterized in that the catalyst (4) used is a phosphonitrilic halide of the general formula

$$(PX_2=N)_ePX_3^+ (MY_{(w-f+1)}R_f)^- \qquad (V),$$

where X and Y are halogens, M is an element having an electronegativity of from 1.0 to 2.2 on the Pauling scale, R is a hydrocarbon radical having from 1 to 10 carbon atoms, e is from 1 to 6, W is the valency or the oxidation state of M and f is from 0 to (w-1).

10. Polysiloxanes according to Claim 9, characterized in X and Y are chlorine and M is phosphorus, e is from 1 to 3 and f is 0.

11. Polysiloxanes according to Claim 1, characterized in that the catalyst used is the reaction product of phosphonitrilic chloride with a compound of the general formula

$$[R_3SiO(R_2SiO)_m]_3P=O \qquad (VI),$$

where R are, independently of one another, identical or different, saturated and/or unsaturated monovalent hydrocarbon radicals having from 1 to 6 carbon atoms or hydrogen, with the proviso that only one bound hydrogen atom is present per silicon, and m assumes a value in the range from 0 to 100.

12. Polysiloxanes according to Claim 1 or 11, characterized in that the catalyst used is the reaction product of phosphonitrilic chloride with a compound of the general formula

$$[R_3SiO(R_2SiO)_m]_3P=O \qquad (VI),$$

after complete or partial removal of volatile, chlorine-containing silicon compounds formed during the reaction.

13. Polysiloxanes according to any of Claims 1 to 12, characterized in that the reaction is carried out at temperatures of from 73 to 120°C and pressures of from 1000 Pa to atmospheric pressure.

**14.** Polysiloxanes according to any of Claims 1 to 12, characterized in that temperature and/or pressure conditions during the reaction are selected so that low molecular weight by-products are removed.

**15.** Preparation of liquid polysiloxanes according to Claim 1, characterized in that the reaction is carried out in a thin-film evaporator.

**16.** Use of liquid polysiloxanes according to Claim 1 in antifoam preparations.

**Revendications**

**1.** Polysiloxanes liquides à 25°C, obtenus par réaction

1) de 100 parties du produit de l'hydrolyse de diméthyldichlorosilane d'une viscosité inférieure à 200 $mm^2$/s à 25°C,

2) de 1 à 100 parties d'un polydiorganosiloxane non-cyclique d'une viscosité inférieure à 200 $mm^2$/s à 25°C de formule générale

$$R^1{}_a SiO_{(4-a)/2} \qquad (I),$$

dans laquelle $R^1$ représente des radicaux hydrocarbonés identiques ou différents, substitués et/ou non substitués, avec 1 à 30 atomes de carbone et a vaut en moyenne de 1,9 à 3,0,

3) de 0,1 à 20 parties d'un composé choisi parmi un ou plusieurs composés a) à d)

a) d'un composé de silicium de formule générale

$$R^2{}_b SiX_{(4-b)} \qquad (II),$$

dans laquelle $R^2$ représente un radical hydrocarboné, substitué et/ou non substitué, avec 1 à 10 atomes de carbone et X représente un groupement hydrolysable et b prend une valeur entre 0 et 1,

b) d'un hydrolysat partiel de a),

c) d'une résine de silicone, essentiellement constituée de motifs $(CH_3)_3 SiO_{1/2}$ et de motifs $SiO_2$, dans laquelle le rapport des motifs $(CH_3)_3 SiO_{1/2}$ aux motifs $SiO_2$ vaut 2 à 1 jusqu'à 1 à 2,

d) d'un acide silicique hydrophile pyrogène ou précipité avec une surface BET de 50 à 400 $m^2$/g

en présence d'une quantité catalytiquement active d'un catalyseur accélérant la réaction des composés (1) à (3).

**2.** Polysiloxanes suivant la revendication 1, caractérisés en ce que le composé (1) présente à 25°C une viscosité inférieure à 100 $mm^2$/s. substitué et/ou non substitué

**3.** Polysiloxanes suivant la revendication 1, caractérisés en ce qu'on utilise comme composé (1) la proportion cyclique du produit de l'hydrolyse de diméthyldichlorosilane de formule générale

$$[(CH_3)_2 SiO]_m \qquad (III),$$

dans laquelle m est un nombre de 3 à 12.

**4.** Polysiloxanes suivant la revendication 1, caractérisés en ce qu'on utilise comme composé (1) la proportion linéaire du produit de l'hydrolyse de diméthyldichlorosilane de formule générale

$$HO[(Si(CH_3)_2 O]_n H \qquad (IV),$$

et d'une viscosité de 20 à 200 $mm^2$/s à 25°C.

**5.** Polysiloxanes suivant la revendication 1, caractérisés en ce qu'on utilise comme composé (1) un mélange de proportions linéaires et cycliques du produit de l'hydrolyse de diméthyldichlorosilane.

**6.** Polysiloxanes suivant la revendication 1, caractérisés en ce que le composé (2) présente à 25°C une viscosité infé-

rieure à 50 mm$^2$/s.

**7.** Polysiloxanes suivant la revendication 1, caractérisés en ce qu'on utilise comme composé (2) de l'hexaméthyldisiloxane.

**8.** Polysiloxanes suivant la revendication 1, caractérisés en ce qu'on utilise comme composé (3) de l'alkyltrialcoxysilane et/ou du tétraalcoxysilane.

**9.** Polysiloxanes suivant la revendication 1, caractérisés en ce qu'on utilise comme catalyseur (4) un halogénure de phosphoronitrile de formule générale

$$(PX_2=N)_e PX_3^+ (MY_{(w-f+1)}R_f)^- \qquad (V),$$

dans laquelle X et Y représentent des halogènes, M représente un élément avec une électronégativité de 1,0 à 2,2 sur l'échelle de Pauling, R représente un radical hydrocarboné avec 1 à 10 atomes de carbone, e vaut de 1 à 6, w est la valence ou l'état d'oxydation de M et f vaut de 0 à (w-1).

**10.** Polysiloxanes suivant la revendication 9, caractérisés en ce que X et Y signifient du chlore et M du phosphore, e présente une valeur entre 1 et 3 et f une valeur de 0.

**11.** Polysiloxanes suivant la revendication 1, caractérisés en ce qu'on utilise comme catalyseur le produit réactionnel du chlorure de phosphoronitrile avec un composé de formule générale

$$[R_3SiO(R_2SiO)_m]_3P=O \qquad (VI),$$

dans laquelle les R signifient indépendamment l'un de l'autre des radicaux hydrocarbonés identiques ou différents, insaturés et/ou saturés, avec 1 à 6 atomes de carbone ou de l'hydrogène, étant entendu qu'un seul atome d'hydrogène est lié par atome de silicium et m prend une valeur entre 0 et 100.

**12.** Polysiloxanes suivant les revendications 1 et 11, caractérisés en ce qu'on utilise comme catalyseur le produit réactionnel du chlorure de phosphoronitrile avec un composé de formule générale

$$[R_3SiO(R_2SiO)_m]_3P=O \qquad (VI),$$

après la séparation complète ou partielle de composés de silicium contenant du chlore, volatils, se formant durant la réaction.

**13.** Polysiloxanes suivant les revendications 1 à 12, caractérisés en ce que la réaction s'effectue à des températures de 70 à 120°C et à des pressions de 1000 Pa jusqu'à la pression normale.

**14.** Polysiloxanes suivant les revendications 1 à 12, caractérisés en ce qu'on choisit la température et/ou les rapports de pression pendant la réaction, de sorte que des produits secondaires de faible poids moléculaire soient éliminés.

**15.** Préparation des polysiloxanes liquides suivant la revendication 1, caractérisée en ce que la réaction s'effectue dans un évaporateur à couche mince.

**16.** Utilisation des polysiloxanes liquides suivant la revendication 1 dans des préparations antimousse.